# EUROPÄISCHE PATENTANMELDUNG

(11) **EP 4 304 160 A1**
(43) Veröffentlichungstag der Anmeldung: **10.01.2024**
(21) Anmeldenummer: 23183227.0
(22) Anmeldetag: 04.07.2023
(51) Int. Cl.: H04M 1/04, H02J 7/00, B60R 11/02, H04M 1/72409, H01R 31/06, H01R 13/66

(54) **HALTERUNG FÜR EIN MOBILES ENDGERÄT**

(30) Priorität: 04.07.2022 DE 102022116665; 04.07.2022 DE 202022103717 U
(71) Anmelder: Palummo, Damiano, 78224 Singen (DE)
(72) Erfinder: Palummo, Damiano, 78224 Singen (DE)
(74) Vertreter: Hofstetter, Schurack & Partner

(57) **Zusammenfassung**

Die Erfindung betrifft eine Halterung (H) für ein mobiles Endgerät (24), mit einer Halteeinrichtung (36), an welchem das mobile Endgerät (24) fixierbar ist, und mit einer Verbindungseinrichtung (34), mittels welchem die Halterung (H) an einem Netzteil (10) des mobilen Endgeräts (24) befestigbar ist.

## Beschreibung

Die Erfindung betrifft eine Halterung für ein mobiles Endgerät. Des Weiteren betrifft die Erfindung eine Verbindungsanordnung einer Halterung für ein mobiles Endgerät an einem zugehörigen Netzteil.

Derartige mobile Endgeräte wie insbesondere Mobiltelefone (Smartphones), Tablets oder dergleichen elektronische Kommunikationsgeräte werden üblicherweise mittels eines in eine Steckdose eingesteckten Netzteils beziehungsweise Ladegeräts geladen, indem das mobile Endgerät über ein Ladekabel mit dem Netzteil verbunden wird. Beim Laden liegt das mobile Endgerät zumeist auf einem Boden oder einer Ablage im Nahbereich der Steckdose, in die das Netzteil eingesteckt ist. Nicht selten liegt hierbei das mobile Endgerät unaufgeräumt und störend herum.

Aus der DE 10 2012 012 041 B3 und aus der DE 10 2007 061 866 A1 sind bereits Netzteile für mobile Endgeräte bekannt, welche elektrische Steckkontakte aufweisen, an welchen das jeweilige mobile Endgerät mit seinem jeweiligen Steckkontakt angesteckt und somit einerseits elektrisch kontaktiert und andererseits an dem Netzteil fixiert werden kann. Somit erfolgt die elektrische Kontaktierung des jeweiligen mobilen Endgeräts mit dem zugehörigen Netzteil von Steckkontakt zu Steckkontakt, also ohne dazwischen angeordnetes Ladekabel. Nachteilig ist hierbei insbesondere, dass die jeweiligen elektrischen Steckkontakte stetig beansprucht werden, beispielsweise mit dem Gewicht des mobilen Endgeräts, was zu einem verhältnismäßig schnellen Versagen der elektrischen Steckkontakte führen kann.

Aus der 299 22 267 U1 ist bereits ein Netzteil mit einer einstückig an diesem angeordneten Halterung für ein mobiles Endgerät bekannt. Auch hierbei erfolgt die Kontaktierung vom mobilen Endgerät zum Netzteil unmittelbar über jeweilige Steckkontakte, so dass sich auch hier die bereits beschriebenen Nachteile ergeben Zudem ist die Halterung lediglich geeignet, für ein mobiles Endgerät einer einzigen Ausführung beziehungsweise Größe genutzt zu werden. Andere mobile Endgeräte mit anderen Abmessungen können demzufolge nicht an dieser Halterung fixiert werden.

Aufgabe der vorliegenden Erfindung ist es, eine Halterung der eingangs genannten Art zu schaffen, welche universell für eine Vielzahl von Netzteilen beziehungsweise mobilen Endgeräten genutzt werden kann und überdies den Lebensdauer des mobilen Endgeräts und des Netzteils nicht nachteilig beeinflusst.

Diese Aufgabe wird erfindungsgemäß durch eine Halterung mit den Merkmalen des Patentanspruchs 1 und durch eine Verbindungsanordnung mit den Merkmalen des Patentanspruchs 10 gelöst. Vorteilhafte Ausgestaltungen mit zweckmäßigen Weiterbildungen der Erfindung sind in den übrigen Patentansprüchen angegeben.

Die erfindungsgemäße Halterung für ein mobiles Endgerät ist separat von dem Netzteil und dem mobilen Endgerät ausgebildet und umfasst eine Halteeinrichtung, an welchem das mobile Endgerät fixierbar ist, und eine Verbindungseinrichtung, mittels welchem die Halterung an einem Netzteil des mobilen Endgeräts befestigbar ist. Mittels der Verbindungseinrichtung ist dabei die separat ausgebildete Halterung an dem Netzteil zu befestigen. Hierdurch kann die Halterung universell für eine Vielzahl unterschiedlicher Netzteile genutzt werden. Die jeweilige Halterung kann dabei dauerhalft, beispielsweise mittels einer Klebverbindung, oder lösbar, beispielsweise mittels einer Klettverbindung, einer kraftschlüssigen oder einer formschlüssigen Verbindung mit dem Netzteil verbunden sein. Ein weiterer Vorteil ist es, dass hierbei die elektrischen Steckkontakte auf Seiten den Netzteils und des mobilen Endgeräts nicht belastet werden, so dass sich kein übermäßiger Verschleiß dieser Steckkontakte ergibt.

Die Halteeinrichtung ist vorzugsweise so ausgebildet, dass eine Mehrzahl unterschiedlich großer und/oder unterschiedlich gestalteter mobiler Endgeräte an der Halterung befestigt werden können. Dies kann durch unterschiedliche Verbindungselemente oder aber durch einen Kraft- und/oder Formschluss erfolgen.

Durch die separate Ausbildung der Halterung von dem Netzteil und dem mobilen Endgerät und durch das Vorsehen der Verbindungseinrichtung zum lösbaren oder unlösbaren Verbinden der Halterung mit dem Netzteil sowie der Halteeinrichtung zum Halten des jeweiligen mobilen Endgeräts ist eine universell einsetzbare Halterung geschaffen, die in besonders günstiger Weise als Zubehör angeboten werden kann.

Mittels der Halterung können somit vorzugsweise mobile Endgeräte unterschiedlicher Gestalt und Abmessung sowie unterschiedlichen Gewichts an dem Netzteil fixiert werden, so dass diese nicht mehr störend auf dem Boden oder einer Ablage im Nahbereich der Steckdose und des eingesteckten Netzteils herum liegen. Somit können auch ungewollte Beschädigungen des jeweiligen mobilen Endgeräts vermieden werden.

In vorteilhafter Ausgestaltung der Erfindung weist die Verbindungseinrichtung wenigstens ein Stützteil auf, mittels welchem die Halterung an dem Netzteil abstützbar ist. Hierbei wäre es beispielsweise denkbar, zusätzlich ein Verbindungselement mit ein Klettband oder dergleichen einzusetzen, mittels welchem das mobile Endgeräte gegen das Stützteil fixiert werden kann.

Alternativ hierzu weist das wenigstens eine Stützteil eine Klebeseite zum Herstellen einer lösbaren oder unlösbaren Klebverbindung mit dem Netzteil auf. Hierdurch kann die Halterung unter Vermittlung des Stützteils der Verbindungseinrichtung unlösbar oder lösbar mit dem Netzteil verbunden werden. Durch einen flüssigen Kleber kann beispielsweise eine dauerhafte, unlösbare Verbindung der Halterung mit dem Netzteil hergestellt werden. Durch ein an der Klebeseite des Stützteils angeordnetes Klebeverbindungselement, beispielsweise ein doppelseitig klebendes Klebeband, kann beispielsweise eine dauerhafte, im Bedarfsfall aber dennoch lösbare Verbindung des Stützteils der Verbindungseinrichtung mit dem Netzteil erzeugt werden.

Alternativ kann die Verbindungseinrichtung wenigstens ein lösbares Element aufweisen, mittels welchem das Stützteil gegen das Netzteil abstützbar ist. Dieses lösbare Element kann beispielsweise ein Klettband, ein Gummiband oder ein Rastelement oder dergleichen sein.

In weiterer Ausgestaltung der Erfindung kann die Verbindungseinrichtung zwei Stützteile aufweisen, mittels welchen die Halterung auf das Netzteil aufsteckbar ist. Mittels der beiden Stützteile kann ein entsprechender Teil des Netzteils beispielsweise kraft- und oder formschlüssig mit der Halterung verbunden sein.

In weiterer Ausgestaltung der Erfindung weist die Halteeinrichtung, mittels welcher das mobile Endgerät an der Halterung fixiert werden kann wenigstens ein Halteteil aufweisen, an welchem das mobile Endgerät abstützbar ist. Die Abstützung kann beispielsweise mittels eines weiteren Halteelements, beispielsweise eines Klettverbands, Gummibands oder dergleichen erfolgen.

Alternativ kann die Halteeinrichtung zwei Halteteile aufweisen, zwischen welchen das mobile Endgerät beispielsweise kraft- und/oder formschlüssig einsteckbar ist. Hierdurch ergibt sich eine besonders einfache und sichere Fixierung des jeweiligen mobilen Endgeräts.

In diesem Zusammenhang ist es auch denkbar, zwischen den freien Enden der Halteteile ein biegeschlaffes Band, beispielsweise ein Klettband oder Gummiband oder ein Seil oder dergleichen vorzusehen, welches nach dem Einstecken des mobilen Endgeräts vom einen zum anderen Halteteil gespannt wird, um somit das mobile Endgerät an der Halterung festzulegen. Hierbei ist es zudem denkbar, dass das mobile Endgerät von unten her in die Halterung eingesteckt wird und mittels des entsprechenden Bandes oder dergleichen an der Halterung fixiert wird. Im Ergebnis soll hierdurch eine besonders günstige und lösbare Festlegung des mobilen Endgerätes an der Halterung beziehungsweise ein Netzteil möglich.

Eine weitere, vorteilhafte Ausführung der Erfindung sieht vor, dass das wenigstens eine oder die beiden Halteteile auf einer jeweiligen, dem mobilen Endgerät zugewandten Anlageseite ein die Reibung erhöhendes Element aufweist beziehungsweise aufweisen. Dieses Element kann beispielsweise ein jeweiliges nachgiebiges Kunststoff- beziehungsweise Gummielement oder dergleichen sein.

Zur Erfindung gehört auch eine Verbindungsanordnung einer solchen Halterung für ein mobiles Endgerät an einem für dieses nutzbaren Netzteil, bei welcher die separat ausgebildete Halterung eine Halteeinrichtung, an welchem das mobile Endgerät fixierbar ist, und eine Verbindungseinrichtung, mittels welchem die Halterung an dem Netzteil des mobilen Endgeräts befestigt ist, aufweist. Die Vorteile einer solchen Verbindungsanordnung ergeben sich aus der zuvor beschrieben Vorteilen der erfindungsgemäßen Halterung.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine Perspektivansicht auf ein in eine Steckdose eingestecktes Netzteil mit einem in einen Steckkontakt des Netzteils eingesteckten Ladekabel und mit einer separat von dem Netzteil ausgebildeten Halterung, welche mittels einer Verbindungseinrichtung mit dem Netzteil verbunden ist und eine Halteeinrichtung zur Halterung unterschiedlicher mobiler Endgeräte aufweist;
- Fig. 2: eine weitere Perspektivansicht auf das in die Steckdose eingesteckte Netzteil mit der an diesem befestigten Halterung, in deren Halteeinrichtung vorliegend ein mobiles Endgerät in Form eines Smartphones eingesteckt ist;
- Fig. 3: eine Perspektivansicht auf die Halterung gemäß einer ersten Ausführungsform;
- Fig. 4: eine Perspektivansicht auf die Halterung gemäß einer zweiten Ausführungsform; und
- Fig. 5a, 5b: eine Perspektivansicht und eine Seitenansicht auf die Halterung gemäß einer dritten Ausführungsform;

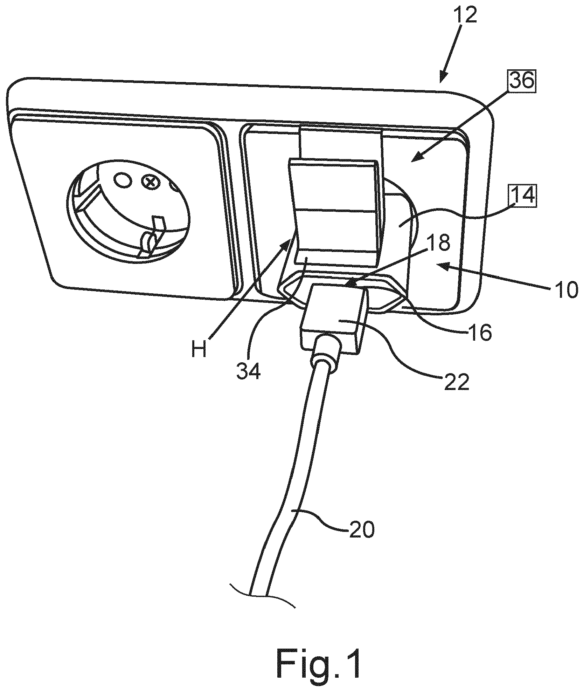

Gemäß Fig. 1 ist in Perspektivansicht ein Ladegerät beziehungsweise Netzteil 10 dargestellt, welches in eine Steckdose 12 in einem Gebäude oder dergleichen eingesteckt ist. An seinem der Steckdose 12 abgewandten Ende ist im Gehäuse 14 des Netzteils 10 eine Öffnung 16 für einen Steckkontakt 18 ausgespart, in welchen ein Ladekabel 20 an seinem einen Ende 22 eingesteckt.

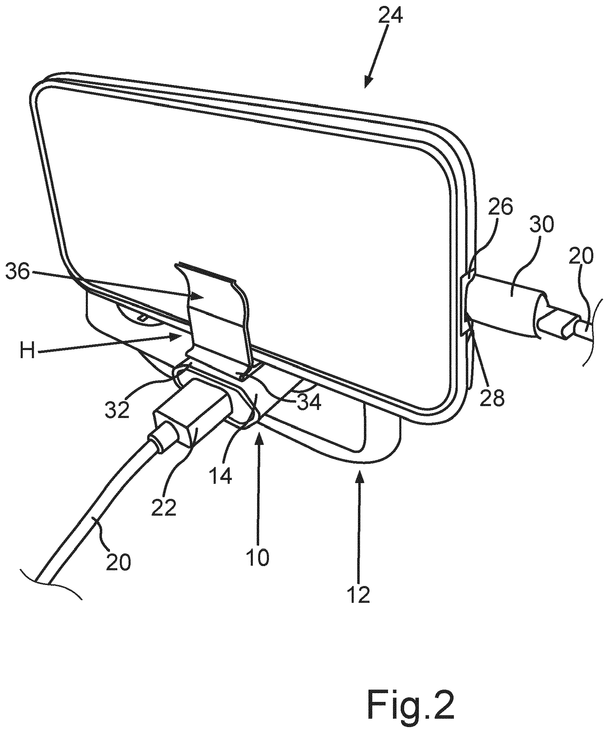

Über dieses Ladekabel 20 wird ein Akkumulator oder dergleichen elektrischer Energiespeicher eines in Fig. 2 ebenfalls in einer Perspektivansicht erkennbaren, auf im Weiteren noch näher erläuterte Weise an dem Netzteil 10 gehaltenes mobiles Endgerät 24 mit elektrischer Energie versorgt. Hierzu weist das mobile Endgerät 24 eine Öffnung 26 für einen Steckkontakt 28 auf, in welchen das Ladekabel 20 mit seinem anderen Ende 30 eingesteckt ist.

Bei dem mobilen Endgerät 24 handelt es sich vorliegend um ein Mobiltelefon in Form eines Smartphones. Natürlich sind hierbei auch jegliche andere mobile Endgeräte beziehungsweise elektrische Kommunikationsgeräte wie Tablets oder tragbare Computer/Laptops denkbar.

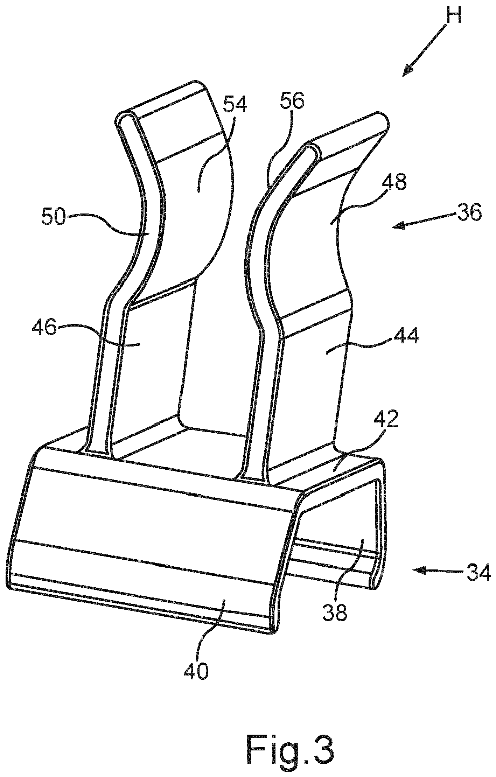

An einer Mantelwand 32 an der Breitseite des Gehäuses 14 ist eine separat von dem Netzteil 10 und dem mobilen Endgerät 24 ausgebildete Halterung H in einer entsprechenden Verbindungsanordnung an dem mobilen Endgerät 24 angeordnet, welche in den Fig. 3 bis 5b in jeweiligen Perspektivansichten beziehungsweise einer Seitenansicht in unterschiedlichen Ausführungsformen dargestellt ist.

Alle Halterungen H sind vorliegend aus einem oder mehreren Kunststoffen gebildet und insbesondere einstückig gestaltet. Es sind aber auch mehrteilige Ausgestaltungen denkbar. Ebenso können die jeweiligen Halterungen auch zumindest teilweise aus einem anderen Material, beispielsweise einem Federstahl oder einem anderen Metall, gebildet sein.

Allen Ausführungsformen ist es dabei gemeinsam, dass die Halterung H eine Verbindungseinrichtung 34, mittels welcher die Halterung H mit dem Netzteil 10 verbunden ist, und eine Halteeinrichtung 36 zum Halten unterschiedlicher mobiler Endgeräte 34 an der Halterung H beziehungsweise an dem Netzteil 10 aufweist.

Bei der Ausführungsform gemäß Fig. 3 weist die Verbindungseinrichtung 34 zwei schenkelartige Stützteile 38, 40 auf, welche von einem ebenfalls als Stützteil fungierenden Zwischenschenkel 42 abstehen. Insgesamt bilden die beiden Stützteile 38, 40 mit dem Zwischenschenkel 42 eine im Wesentlichen U-förmige Aufnahme aus, mittels welcher die Halterung H form- und oder kraftschlüssig am Netzteil 10 abgestützt werden kann. Es ist klar, dass die beiden Schenkel 38, 40 auch miteinander verbunden sein können, um eine ringförmige Aufnahme zu binden.

Die Halteeinrichtung 36 weist vorliegend zwei Haltearme beziehungsweise Halteteile 44, 46 auf, zwischen welchen das mobile Endgerät 24 abstützbar beziehungsweise einklemmbar ist. Zudem fungiert vorliegend der Zwischenschenkel 42 ebenfalls als Stützteil, an welchem sich das zwischen den Halteteilen 44, 46 eingeklemmte mobile Endgerät 24 abstützen kann. Die Klemmung des mobilen Endgeräts 24 erfolgt im vorliegenden Fall im Wesentlichen kraftschlüssig, und je nach Gestalt des mobilen Endgeräts 24 gegebenenfalls auch formschlüssig. Da die Halterung H insgesamt auch einem federnd nachgiebigen Material, beispielsweise einem entsprechenden Kunststoff gebildet ist, ergibt sich bei Eiklemmen des mobilen Endgeräts 24 zwischen den Halteteilen 44, 46 die gewünschte Kraftbeaufschlagung zur Erzeugung des Kraftschlusses.

Vorliegend ist zudem erkennbar, dass die beiden Haltearme beziehungsweise Halteteile 44, 46 nahe ihrer freien Ende eine jeweilige Krümmung 48, 50 aufweisen, so dass die schlitzartige Aufnahme für das mobile Endgerät 24 in diesem Bereich entsprechend verjüngt ist. Hierdurch kann ein noch günstigerer Kraftschluss zwischen der Halteeinrichtung 36 und dem mobilen Endgerät 24 erzeugt werden.

Zudem können die Halteteile 44, 46 auf ihren dem mobilen Endgerät 24 zugewandten Anlageseiten 54, 56, insbesondere im Bereich der Krümmungen 48, 50, ein die Reibung erhöhendes Element aufweisen. Dies kann beispielsweise ein weichelastisches Kunststoffelement beziehungsweise Gummielement sein, welches zum Beispiel separat ausgebildet und mit dem jeweiligen Halteteile 44, 46 verbunden ist. Denkbar wäre auch die Herstellung der Halterung H in einem Zwei-Komponenten-Kunststoffverfahren, wobei die dem mobilen Endgerät 24 zugewandten Anlageseiten 54, 56 aus einem gegenüber der anderen Komponente weichelastischeren Material bestehen.

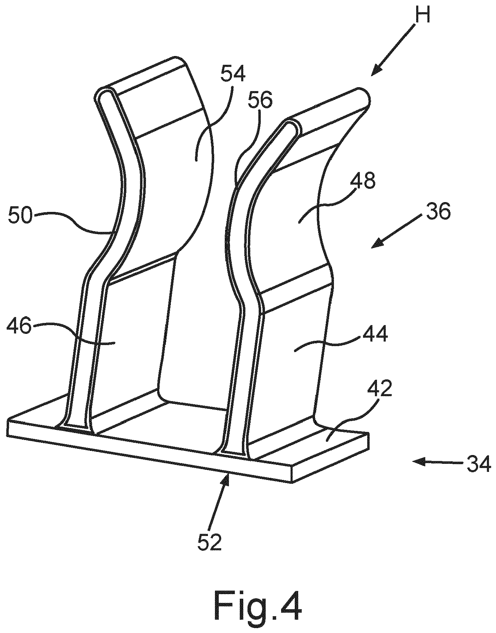

Fig. 4 zeigt in einer Perspektivansicht eine Ausführungsform der Halterung H, bei der die Halteeinrichtung 36 zum Halten des mobilen Endgerätes 24 im Wesentlichen identisch ausgebildet mit derjenigen gemäß Fig. 3, auf deren Beschreibung hiermit ausdrücklich verwiesen wird.

Im Unterschied zur Ausführungsform gemäß Fig. 3 ist vorliegend jedoch eine andersartige Verbindungseinrichtung 34 zum Verbinden der Halterung H mit dem Netzteil 10. Hierbei ist vorliegend lediglich ein Stützteil in Form des Zwischenschenkels 42 vorgesehen, auf dessen der Halteeinrichtung 36 abgewandten Seite eine ebene Klebeseite beziehungsweise Klebefläche 52 zum Herstellen einer lösbaren oder unlösbaren Klebverbindung mit dem Netzteil 10 angeordnet ist.

Hierbei kann beispielsweise ein flüssiger Klebstoff auf die Klebefläche 52 aufgetragen und die Halterung H unlösbar mit dem Gehäuse 14 des Netzteils 10 verbunden werden. Alternativ hierzu kann an der Klebeseite 52 des Stützteils 42 auch ein Klebeverbindungselement, beispielsweise in Form eines doppelseitigen Klebebandes, angeordnet sein, über welches die Halterung H mit dem Netzteil 10 verbindbar beziehungsweise verbunden ist.

Alternativ hierzu kann die Verbindungseinrichtung auch wenigstens ein lösbares Element, beispielsweise ein Klettband, ein Gummiband oder dergleichen aufweisen, mittels welchem das Stützteil 42 gegen das Netzteil 10 abstützbar ist. Hierdurch ergibt sich in einfacher weise eine lösbare Verbindung zwischen der Halterung H und dem Netzteil 10.

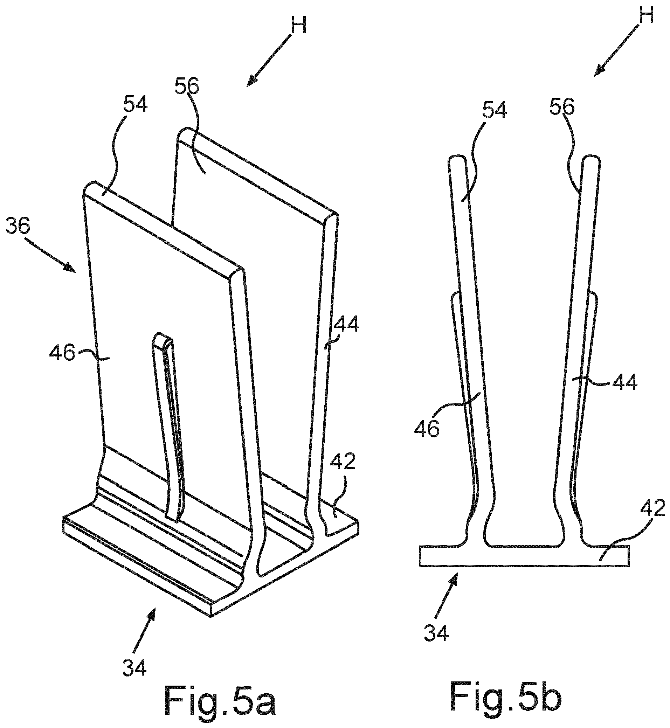

Die Fig. 5a und 5b zeigen in einer Perspektivansicht und einer Seitenansicht eine Ausführungsform der Halterung H, bei der die Verbindungseinrichtung 34 zum Verbinden der Halterung H mit dem Netzteil 10 im Wesentlichen identisch ausgebildet mit derjenigen gemäß Fig. 4, auf deren Beschreibung hiermit ausdrücklich verwiesen wird.

Die Halteeinrichtung 36 weist hier analog zur Ausführungsform gemäß Fig. 3 zwei Haltearme beziehungsweise Halteteile 44, 46 auf, zwischen welchen das mobile Endgerät 24 abstützbar beziehungsweise einklemmbar ist. Zudem fungiert vorliegend der Zwischenschenkel 42 wiederum gegebenenfalls ebenfalls als Stützteil, an welchem sich das zwischen den Halteteilen 44, 46 eingeklemmte mobile Endgerät 24 abstützen kann. Die Klemmung des mobilen Endgeräts 24 erfolgt im vorliegenden Fall im Wesentlichen kraftschlüssig, und je nach Gestalt des mobilen Endgeräts 24 gegebenenfalls auch formschlüssig. Da die Halterung H insgesamt auch einem federnd nachgiebigen Material, beispielsweise einem entsprechenden Kunststoff gebildet ist, ergibt sich bei Eiklemmen des mobilen Endgeräts 24 zwischen den Halteteilen 44, 46 die gewünschte Kraftbeaufschlagung zur Erzeugung des Kraftschlusses.

Vorliegend ist zudem erkennbar, dass die beiden Haltearme beziehungsweise Halteteile 44, 46 in Richtung ihrer freien Enden V-förmig auseinander laufen, so dass die schlitzartige Aufnahme für das mobile Endgerät 24 geschaffen ist, welche sich ausgehend vom Zwischenschenkel 42 zu den freien Enden hin V-förmig aufweitet. Hierdurch kann ein besonders vorteilhaftes Einstecken und Abnehmen des mobilen Endgeräts 24 sowie ein günstiger Kraftschluss zwischen der Halteeinrichtung 36 und dem mobilen Endgerät 24 erzeugt werden.

Zudem können auch hier die Halteteile 44, 46 auf ihren dem mobilen Endgerät 24 zugewandten Anlageseiten 54, 56 ein die Reibung erhöhendes Element aufweisen. Dies kann beispielsweise ein weichelastisches Kunststoffelement beziehungsweise Gummielement sein, welches zum Beispiel separat ausgebildet und mit dem jeweiligen Halteteile 44, 46 verbunden ist. Denkbar wäre auch hier die Herstellung der Halterung H in einem Zwei-Komponenten-Kunststoffverfahren, wobei die dem mobilen Endgerät 24 zugewandten Anlageseiten aus einem gegenüber der anderen Komponente weichelastischeren Material bestehen.

### Bezugszeichenliste

- 10: Netzteil
- 12: Steckdose
- 14: Gehäuse
- 16: Öffnung
- 18: Steckkontakt
- 20: Ladekabel
- 22: Ende
- 24: Endgerät
- 26: Öffnung
- 28: Steckkontakt
- 30: Ende
- 32: Mantelwand
- 34: Verbindungseinrichtung
- 36: Halteeinrichtung
- 38: Schenkel/Stützteil
- 40: Schenkel/Stützteil
- 42: Zwischenschenkel/Stützteil
- 44: Halteteil
- 46: Halteteil
- 48: Krümmung
- 50: Krümmung
- 52: Klebefläche/Klebeseite
- 54: Anlagefläche
- 56: Anlagefläche

- H: Halterung

## Patentansprüche

1. Halterung (H) für ein mobiles Endgerät (24), mit einer Halteeinrichtung (36), an welchem das mobile Endgerät (24) fixierbar ist, und mit einer Verbindungseinrichtung (34), mittels welchem die Halterung (H) an einem Netzteil (10) des mobilen Endgeräts (24) befestigbar ist.

2. Halterung (H) nach Anspruch 1,
die Verbindungseinrichtung (34) wenigstens ein Stützteil (38, 40, 42) aufweist, mittels welchem die Halterung (H) an dem Netzteil (10) abstützbar ist.

3. Halterung (H) nach Anspruch 2,
**dadurch gekennzeichnet, dass**
das wenigstens eine Stützteil (42) eine Klebeseite (52) zum Herstellen einer lösbaren oder unlösbaren Klebverbindung mit dem Netzteil (10) verbindbar ist.

4. Halterung (H) nach einem der Ansprüche 3,
**dadurch gekennzeichnet, dass**
an der Klebeseite (52) des Stützteils (42) ein Klebeverbindungselement angeordnet ist.

5. Halterung (H) nach einem der Ansprüche 2 bis 4,
**dadurch gekennzeichnet, dass**
die Verbindungseinrichtung (34) wenigstens ein lösbares Element aufweist, mittels welchem das Stützteil (42) gegen das Netzteil (10) abstützbar ist.

6. Halterung (H) nach einem der Ansprüche 2 bis 5,
**dadurch gekennzeichnet, dass**
die Verbindungseinrichtung (34) zwei Stützteile (38, 40) aufweist, mittels welchen die Halterung (H) auf das Netzteil (10) aufsteckbar ist.

7. Halterung (H) nach einem der vorhergehenden (22, 30) Ansprüche,
**dadurch gekennzeichnet, dass**
die Halteelenrichtung (36) wenigstens ein Halteteil (44, 46) aufweist, an welchem das mobile Endgerät (24) abstützbar ist.

8. Halterung (H) nach Anspruch 7,
**dadurch gekennzeichnet, dass**
die Halteeinrichtung (36) zwei Halteteile (44, 46) aufweist, zwischen welchen das mobile Endgerät (24) einsteckbar ist.

9. Halterung (H) nach einem der Ansprüche 7 oder 8,
**dadurch gekennzeichnet, dass**
das wenigstens eine oder die beiden Halteteile (44, 46) auf einer jeweiligen, dem mobilen Endgerät (24) zugewandten Anlageseite (54, 56) ein die Reibung erhöhendes (22, 30) Element aufweist beziehungsweise aufweisen.

10. Verbindungsanordnung einer Halterung (H) für ein mobiles Endgerät (24) an einem für dieses nutzbaren Netzteil (10), bei welcher die separat ausgebildete Halterung (H) eine Halteeinrichtung (36), an welchem das mobile Endgerät (24) fixierbar ist, und eine Verbindungseinrichtung (34), mittels welchem die Halterung (H) an dem Netzteil (10) des mobilen Endgeräts (24) befestigt ist, aufweist.
